# FASCICULE DE BREVET EUROPEEN

(11) **EP 2 932 088 B1**
(45) Date de publication et mention de la délivrance du brevet: **22.03.2017**
(21) Numéro de dépôt: 13818292.8
(22) Date de dépôt: 11.12.2013
(51) Int. Cl.: F02N 11/00, H02P 29/00, H02P 6/00

(54) **ENSEMBLE MECATRONIQUE POUR L'ENTRAINEMENT D'UN ORGANE EXTERIEUR UTILISANT UN MOTEUR SANS BALAI ET UN ENSEMBLE SIMPLE DE COMPOSANTS ELECTRONIQUES**
MECHATRONISCHE ANORDNUNG ZUM STEUERN EINES EXTERNEN ELEMENTS UNTER VERWENDUNG EINES BÜRSTENLOSEN MOTORS UND EINER EINFACHEN ANORDNUNG ELEKTRONISCHER KOMPONENTEN
MECHATRONIC ASSEMBLY FOR DRIVING AN EXTERNAL MEMBER USING A BRUSHLESS MOTOR AND A SIMPLE ASSEMBLY OF ELECTRONIC COMPONENTS

(30) Priorité: 13.12.2012 FR 1262015
(43) Date de publication de la demande: 21.10.2015
(73) Titulaire: Moving Magnet Technologies, 25000 Besançon (FR)
(72) Inventeur: RONDOT, Eric, 25410 Berthelange (FR); ANDRIEUX, Gaël, 2533 Evilard (CH)
(74) Mandataire: IP Trust
(86) Numéro de dépôt international: PCT/FR2013/053027
(87) Numéro de publication internationale: WO 2014/091152

(56) Documents cités:
- EP-A1- 0 483 894
- WO-A1-02/060711
- US-A- 5 519 294
- US-A1- 2004 036 295
- US-A1- 2008 105 230
- US-A1- 2009 020 092
- US-B1- 6 424 798

## Description

### DOMAINE TECHNIQUE DE L'INVENTION

La présente invention concerne le domaine des moteurs électriques polyphasés à courant continu sans balai (brushless ou BLDC en anglais). Plus particulièrement, elle concerne une méthode de pilotage pour ces moteurs, n'utilisant pas de microprocesseur et ne nécessitant, pour le moteur, que deux fils d'alimentation électrique.

Le besoin d'actionneurs mécatroniques est de plus en plus pressant dans de multiples secteurs d'activités, avec également des environnements de plus en plus sévères. Le secteur automobile n'est pas épargné et les besoins de réduction d'émissions polluantes par les OEMS les conduit à proposer une multitude d'agrégats connexes au moteur à combustion. De surcroît, le downsizing des motorisations ainsi que le foisonnement des fonctions périphériques rendent les espaces disponibles de plus en plus faibles. De fait, les environnements dans lesquels doivent s'implanter les fonctions périphériques proposent des contraintes thermiques et mécaniques très sévères (température, vibrations, place disponible).

Il devient donc fondamental de proposer des systèmes de plus en plus robustes vis-à-vis de ces contraintes. La technologie du moteur à courant continu sans balais (BLDC) répond à ces contraintes mais est souvent pénalisée par un besoin en électronique de pilotage. L'électronique devient rapidement un point bloquant pour garantir une durée de vie du système à haute température. Des solutions optimisées et innovantes doivent donc être développées.

De plus, le secteur automobile est toujours plus concurrentiel et beaucoup de fonctions mécatroniques sont tombées dans le giron technologique des moteurs à courant continu à balai associés à des réducteurs mécaniques. En effet, pour des questions de coûts systèmes, le moteur à courant continu à balai (BDC) est souvent préféré au moteur à courant continu sans balais (BLDC), notamment et principalement pour des facilités de pilotage mais aussi de coûts électroniques réduits du fait de l'absence de microprocesseur. Ceci est renforcé par le fait que beaucoup d'électroniques de commandes véhicules (ECU en anglais) sont équipées de ponts de puissance (dit « en H ») dédiés au pilotage bidirectionnel d'actionneurs monophasés (moteur DC ou solénoïde polarisé ou non).

Toutefois l'ingénieur pourrait regretter que pour des raisons purement économiques, il ne puisse pas mettre en oeuvre une technologie offrant des atouts inégalables par rapport à un moteur DC : le BLDC qui offre robustesse, faible usure, compatibilité électromagnétique, compacité...

Le fait également d'employer une ECU existante permet d'accélérer la mise sur le marché d'un produit en évitant le débogage et la validation d'un nouveau logiciel de pilotage et de régulation.

### ETAT DE L'ART

Bon nombre de fonctionnalités, que ce soit dans le domaine automobile ou autres, requièrent des systèmes permettant un positionnement asservi en rotation ou en translation ; ceux-ci pouvant être du domaine pneumatique, hydraulique ou électrique. Dans le cadre de la présente invention, nous considérerons seulement les actionneurs électriques. Le terme « actionneur » décrit dans cette invention l'ensemble formé par un moteur électrique, les moyens de détection éventuels de la position du rotor moteur, les moyens éventuels de transformation de mouvement et un capteur de position en sortie, l'électronique de commutation et le connecteur.

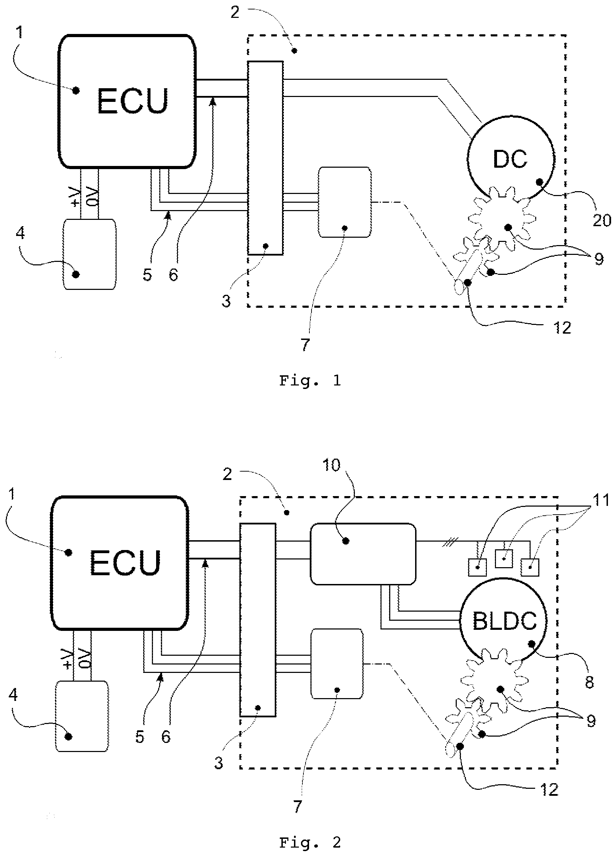

Deux grandes familles d'actionneurs peuvent être identifiées :
- Les actionneurs dits « dumb » ou actionneurs non intelligents. Un tel actionneur (2) est présenté en Fig. 1, l'actionneur (2) comprend un moteur DC à balai (20) et un capteur de position (7) qui peut se résumer à une piste résistive associée à un curseur. La partie intelligente en charge de l'asservissement de position, se trouve dans une électronique déportée (1) appelée ECU (Electronic Control Unit) par les personnes du métier.
- les actionneurs dits « smart » ou actionneurs intelligents. L'actionneur comprend un microcontrôleur en charge de la fonction d'asservissement de position. Généralement ce type d'actionneur est piloté soit par un signal PWM, ou un bus de communication LIN ou CAN reconnus comme des standards dans le domaine automobile.

Pour les applications automobiles proches du moteur thermique telles que par exemple les vannes « wastegate » d'un système turbo, la solution « dumb » est de loin préférée à la solution « smart » pour des raisons de compatibilité à forte température des composants électroniques, notamment le microcontrôleur.

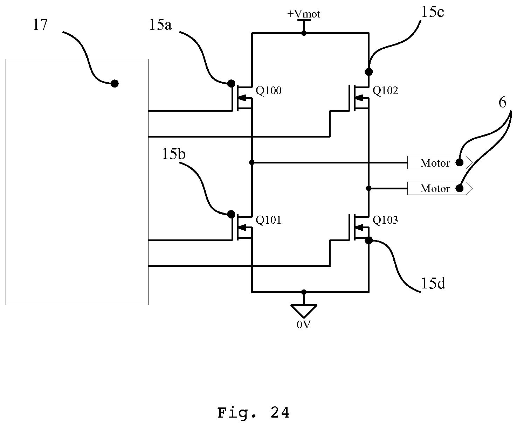

Dans une solution « dumb » telle que schématisée en figure 1, une ECU (1) lit le signal de position (5) fourni par un capteur de position (7) accouplé à la sortie mécanique (12) de l'actionneur (2), puis calcule un signal de couple et de direction (6) appliqué à un moteur DC à balai (20). La sortie mécanique (12) est accouplée à un organe extérieur (non montré) à mouvoir comme un clapet ou un pointeau par exemple. L'action sur le moteur (20) est transmise à la sortie mécanique (12) de l'actionneur (2) par l'intermédiaire d'un étage mécanique réducteur de vitesse ou transformateur (de rotatif en linéaire) de mouvement (9). Ainsi cette boucle fermée permet d'asservir en position la sortie mécanique (12) de l'actionneur (2). Les connexions (3) entre l'ECU (1) et l'actionneur (2) sont peu nombreuses : 2 fils pour le moteur DC à balai (20)- dont le signal différentiel entre ces deux fils peut être un signal positif ou négatif - et 3 fils pour le capteur de position (7) - dont une masse et un signal positif pour l'alimentation et un pour le signal de position. Le moteur DC (20) répond aux signaux de couple et direction (6) fournis par l'ECU (1) au travers d'un pont de puissance dit pont H (voir figure 24) constitué de quatre transistors (15a, 15b, 15c, 15d).

Le brevet US005773941 décrit une invention permettant de piloter, uni-directionnellement, un moteur DC sans balai triphasé à l'aide de deux fils, dont un fil de référence (la masse ou 0V) et un fil de signal de couple. Une alimentation externe délivre le signal de couple qui peut être continu ou haché. L'électronique de commutation est autoalimentée par une alimentation rechargeable prenant son énergie sur le signal de couple. Un autre exemple de l'utilisation d'un moteur DC sans balais triphasé est la publication US2008/0105230.

Que ce soit dans les applications industrielles ou automobiles, le moteur DC sans balai est aujourd'hui répandu et préféré pour les avantages qu'il offre par rapport au moteur DC comme cela est décrit dans le brevet US4365187 (colonne 1, ligne 9). Ce type de moteur est préféré dans sa structure moteur DC sans balai monophasé avec 1 bobine ou 2 demi-bobines. Une électronique simple pouvant être intégrée à proximité du moteur, voir dans le boitier constituant le moteur, gère l'auto-commutation du dit moteur à partir du signal fourni par une ou deux sondes de Hall.

### INCONVENIENT DE L'ART ANTERIEUR

L'électrification croissante des fonctions présentes sous le capot d'une automobile fait que les actionneurs électriques sont soumis à des contraintes diverses et de plus en plus rudes notamment en ce qui concerne la résistance à des températures ambiantes supérieures à 125°C.

Les systèmes existants dits « smart », embarquant un microcontrôleur et/ou une électronique complexe nécessaire au pilotage d'un moteur et à l'asservissement en position de l'actionneur, sont limités en termes de température ambiante. Le type de composant économiquement 'viable' ne permet pas de franchir la limite des 125°C et nécessite souvent des moyens de refroidissement coûteux.

Les systèmes existants dits « dumb », sont quant à eux compatibles avec les températures ambiantes souhaitées de part le fait que l'actionneur ne comprend aucun composant électronique complexe et sensible. Seulement un tel actionneur fait appel à un moteur DC à balai qui industriellement parlant sera moins performant et compact qu'un moteur DC sans balai qui présente également l'énorme avantage d'une durée de vie très supérieure au traditionnel moteur DC avec balai. Il est admis par les personnes du métier que les moteurs DC à balai sont sources de perturbation électromagnétique, ce qui est un point sensible dans un environnement de plus en plus occupé par les systèmes électroniques et autres calculateurs.

Une des structures classiques des moteurs DC sans balai polyphasé est un moteur à trois phases connectées soit en étoile ou soit en triangle laissant ainsi trois points de connexion pour l'alimentation du moteur. L'auto-commutation d'un moteur DC sans balai pour une application de positionnement, nécessite l'utilisation de trois sondes permettant de connaitre la position du rotor moteur. Concevoir un actionneur « dumb » avec un moteur DC sans balai, en lieu et place du moteur DC avec balai nécessite l'utilisation d'une ECU adaptée et conçue pour le pilotage de moteur triphasé à savoir un pont triphasé avec six transistors et cinq points de connexion avec les sondes rotor. Les systèmes d'asservissement en position requièrent un contrôle bidirectionnel de la rotation du moteur, ce qui ne peut être réalisé par l'invention décrite dans le brevet US005773941 dont l'entrée (repérée 22 dans ce texte) n'accepte qu'une seule polarité.

Les autres applications des moteurs DC sans balai majoritairement monophasé telle que décrites dans le brevet US4365187 sont principalement employées pour des ventilateurs ou pompes ne nécessitant qu'un seul sens de rotation. Comme décrit colonne 5 ligne 3 du brevet sus-cité, la structure du moteur de par sa géométrie ou le positionnement des sondes, doit être conçu pour assurer le bon démarrage du moteur dans le sens de rotation privilégié. De ce fait le moteur monophasé DC sans balai et son électronique de pilotage n'est pas adapté pour les applications de positionnement, sujet de la présente invention, requérant sans cesse une correction de position sollicitant une rotation bidirectionnelle du moteur.

### SOLUTION APPORTEE PAR L'INVENTION

La présente invention concerne un système de commande alimenté par une source d'énergie et un actionneur pouvant être de type linéaire ou rotatif suivant le système de transformation de mouvement appliqué à la sortie mécanique. Un capteur absolu mesure la position angulaire ou linéaire à la sortie mécanique de l'actionneur, position qui sera asservie par le système de commande.

L'objet de l'invention est de proposer un actionneur mû par un moteur à courant continu DC sans balai tout en conservant les éléments existants identiques au système basé sur un moteur DC à balais. L'actionneur est relié au système de commande par l'intermédiaire d'un connecteur regroupant les signaux analogiques et/ou numériques provenant du capteur de position, ainsi que les signaux combinant la direction et le couple à produire par le moteur BLDC.

Un circuit électronique rudimentaire résistant à de forte température (>125°C), gère l'auto-commutation des N phases du moteur à l'aide de N sondes renseignant la position du rotor du moteur. L'objectif de la solution décrite ci-après est de proposer un compromis technologique permettant de répondre aux problématiques citées précédemment proposant une solution économique ne nécessitant pas de microprocesseur, permettant l'emploi d'un moteur à courant continu sans balai en lieu et place d'un moteur à courant continu avec balai, tout en gardant la possibilité d'utiliser un moteur polyphasé réversible et de le piloter dans les deux sens de rotation. L'invention se destine donc à tout moteur polyphasé à N phases.

La présente invention apporte une solution économique à la substitution d'un moteur à courant continu DC avec balai par un moteur à courant continu DC sans balai, en répondant aux critères suivants :
- 1-: conserve une commande déportée existante (ECU), sans aucune modification que ce soit matérielle ou logicielle.
- 2-: Interchangeabilité immédiate avec les produits déjà existant.
- 3-: Accroit la durée de vie de l'actionneur.
- 4-: Permet un pilotage bidirectionnel du moteur.
- 5-: Très peu de composants électroniques (simple et robuste) embarqués dans l'actionneur.
- 6-: Composants utilisés offrant une compatibilité et une résistance à des températures ambiantes >125°C.
- 7-: Moteur DC sans balai et nombre de composants restreints permettent une intégration à forte compacité.
- 8-: Gain sur le poids de l'actionneur.
- 9-: Diminution des perturbations électromagnétiques.
Plus particulièrement, l'invention concerne un ensemble mécatronique pour le positionnement d'un organe comprenant une unité de commande (1) et un actionneur (2), l'unité de commande (1) comprenant un algorithme d'asservissement et un pont de puissance, ledit algorithme pilotant ledit pont de puissance, le pont de puissance délivrant un signal électrique bifilaire (6) composé d'un signal de couple et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), caractérisé en ce que l'état des interrupteurs de puissance (25) est commandé directement par un signal issu des sondes (11) de détection.

On entend, au sens du présent brevet, par « commandé directement » la situation où le signal commandant l'état des interrupteurs de puissance est issu, sans aucun autre traitement :
1- soit de la sortie d'une sonde de détection,
2- soit de la combinaison logique de plusieurs sondes de détection,
3- soit de la combinaison de une ou plusieurs sonde de détection et d'un signal de direction (sens de rotation du moteur, comme écrit ci-dessous).
Aucun autre traitement que des opérations logiques très simples n'est appliqué entre le signal issu des sondes de détection et la commande d'état des interrupteurs de puissance. Ces opérations simples restent réalisables avec des portes logiques ou des composants discrets tels que transistors, diodes, résistances, ...

Dans un mode préféré, le sens de rotation du moteur est imposé par une logique combinatoire élémentaire bâtie à partir de la polarité du signal électrique bifilaire et du signal des sondes de détection.

Dans un mode de réalisation particulier l'ensemble mécatronique comprend en outre un capteur d'asservissement absolu de l'organe alimenté par un deuxième signal électrique.

Dans un autre mode de réalisation le capteur d'asservissement absolu de l'organe est alimenté par le signal électrique bifilaire.

Dans un mode de réalisation particulier, les sondes de détection binaires de la position du rotor sont alimentées par le signal électrique bifilaire.

Dans un autre mode de réalisation, les sondes de détection binaires de la position du rotor sont alimentées par le deuxième signal électrique.

Dans un mode particulier de réalisation, le signal électrique bifilaire est un signal continu dont l'amplitude est contrôlée par l'algorithme d'asservissement à partir de l'information de position donné par le capteur d'asservissement.

Dans un autre mode de réalisation, le signal bifilaire est un signal haché dont le rapport cyclique est contrôlé par l'algorithme d'asservissement à partir de l'information de position donné par le capteur d'asservissement.

Dans un mode préféré, le signal bifilaire est redressé par un pont de diodes afin d'acheminer aux N phases du moteur un courant positif.

L'invention concerne également une vanne de contrôle de débit fluidique, caractérisé en ce qu'elle comporte un clapet entraîné par l'actionneur d'un ensemble mécatronique munie d'une unité de commande (1) comprenant un algorithme d'asservissement et un pont de puissance, ledit algorithme pilotant ledit pont de puissance, le pont de puissance délivrant un signal électrique bifilaire (6) composé d'un signal de couple et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), caractérisé en ce que l'état des interrupteurs de puissance (25) est commandé directement par un signal issu des sondes (11) de détection.

L'invention concerne encore un circuit d'asservissement de l'actionneur d'un organe mobile monté sur un moteur thermique caractérisé en ce qu'il comporte un calculateur exécutant un algorithme d'asservissement et un pont de puissance, ledit algorithme pilotant ledit pont de puissance, le pont de puissance délivrant un signal électrique bifilaire (6) composé d'un signal de couple et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), caractérisé en ce que l'état des interrupteurs de puissance (25) est commandé directement par un signal issu des sondes (11) de détection.

### BREVE DESCRIPTION DES FIGURES

D'autres caractéristiques et avantages de l'invention ressortiront pleinement de la description qui en est faite ci-après, à titre indicatif et nullement limitatif, en référence aux dessins annexés dans lesquels :
- la figure 1 décrit un ensemble mécatronique de l'art antérieur,
- la figure 2 décrit un ensemble mécatronique suivant l'invention,
- la figure 3 décrit un exemple des différents bobinages multiphasés des moteurs auxquels l'invention se rapporte,
- la figure 4 décrit le détail du circuit électronique rudimentaire dans le cadre d'un actionneur commandé de manière bidirectionnelle,
- la figure 5 décrit le détail du circuit électronique rudimentaire dans le cadre d'un actionneur commandé de manière unidirectionnelle,
- la figure 6 décrit l'alimentation de la logique de commutation suivant un premier mode de réalisation,
- la figure 7 décrit l'alimentation de la logique de commutation suivant un deuxième mode de réalisation,
- la figure 8 décrit l'allure des couples, courants suivant un premier mode de fonctionnement, dit « 120° unipolaire»,
- la figure 9 décrit l'allure des couples, courants suivant un second mode de fonctionnement, dit « 180° unipolaire»,

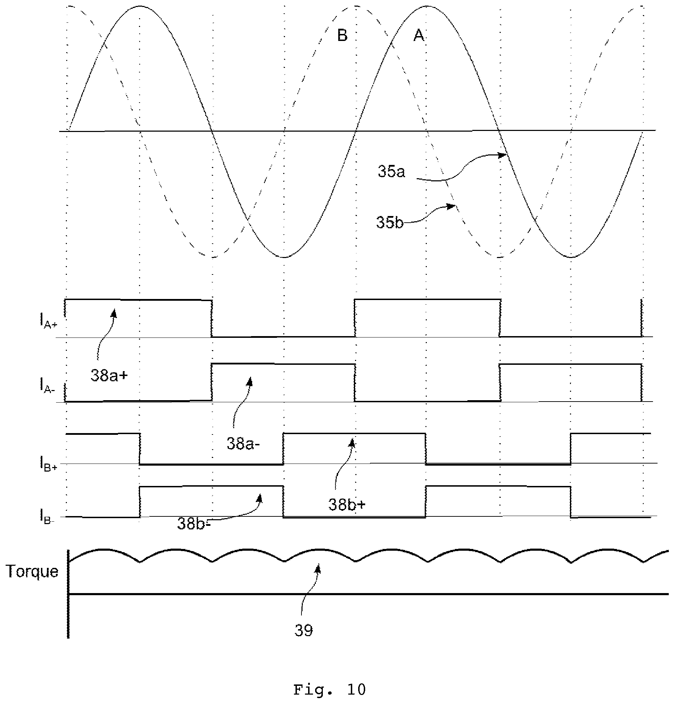

- la figure 10 décrit l'allure des couples, courants suivant un troisième mode de fonctionnement, dit « diphasé bipolaire à point milieu »,
- la figure 11 décrit le calage des sondes dans le cadre des deux modes illustrés par les figures 8 et 9
- la figure 12 décrit le circuit électronique de la logique de commutation suivant le premier mode « 120° unipolaire » ainsi que sa table de vérité,
- la figure 13 décrit le circuit électronique de la logique de commutation suivant le second mode « 180° unipolaire » ainsi que sa table de vérité,
- la figure 14 décrit le circuit électronique de la logique de commutation suivant le troisième mode « diphasé bipolaire à point milieu » ainsi que sa table de vérité,
- la figure 15 décrit une partie du circuit électronique de la logique de commutation (s'appliquant au schéma illustrés par les figures 12, 13 et 14) suivant un mode de réalisation particulier permettant la commande bidirectionnelle du moteur ainsi que sa table de vérité,
- la figure 16 décrit une partie du circuit électronique de la logique de commutation (s'appliquant au schéma illustrés par les figures 12, 13 et 14) suivant un mode de réalisation particulier permettant la commande bidirectionnelle du moteur ainsi que sa table de vérité, et comme alternative à la solution proposée en figure 15,
- la figure 17 décrit une partie du circuit électronique de la logique de commutation suivant un mode de réalisation particulier permettant la commande bidirectionnelle et bipolaire du moteur, ainsi que sa table de vérité.
- la figure 18 décrit une partie du circuit électronique de la logique de commutation suivant un mode de réalisation particulier permettant la commande bidirectionnelle et bipolaire (magnétiquement) du moteur, ainsi que sa table de vérité.
- la figure 19 décrit un circuit permettant d'extraire l'information de direction contenu dans le signal de commande,
- la figure 20 décrit un circuit permettant d'extraire l'information de direction contenu dans le signal de commande,
- la figure 21 décrit les signaux issus des circuits représentés par les figures 19 et 20
- la figure 22 décrit un circuit permettant d'extraire l'information de direction contenu dans le signal de commande,
- la figure 23 décrit les signaux issus des circuits illustrés par la figure 22
- la figure 24 décrit la configuration typique du pont de puissance d'une unité de commande.

### DESCRIPTION DETAILLEE D'EXEMPLES DE REALISATION

La Figure 1 décrit, selon l'état de l'art, un ensemble mécatronique pour le positionnement couramment utilisé dans les systèmes existant, composé d'une source d'énergie (4) alimentant une unité de commande (1) pilotant un actionneur (2) composé d'un moteur DC avec balai (20) associé à un ensemble mécanique de transformation de mouvement (9). Un capteur (7), accouplé à la sortie mécanique (12) de l'actionneur, retourne l'information de position (5) au système de commande (1) qui agit sur les signaux combinés de couple et direction (6) regroupés dans un connecteur de liaison (3). La sortie mécanique (12) est accouplée à un organe extérieur à mouvoir comme un clapet ou un pointeau par exemple et dans une application automobile.

La figure 2 décrit un ensemble mécatronique selon l'invention composé d'une source d'énergie (4) alimentant une unité de commande (1) pilotant un actionneur (2) composé d'un moteur DC sans balai (8) associé à un ensemble mécanique de transformation de mouvement (9). Un capteur (7), accouplé à la sortie mécanique (12) de l'actionneur (2), retourne l'information de position (5) à l'unité de commande (1) qui agit sur les signaux combinés de couple et direction (6) regroupés dans un connecteur de liaison (3). La position du rotor du moteur (8) est lue à l'aide de N sondes (11) qui, par l'intermédiaire d'un circuit électronique rudimentaire (10), auto-commutent les N phases du moteur (8).

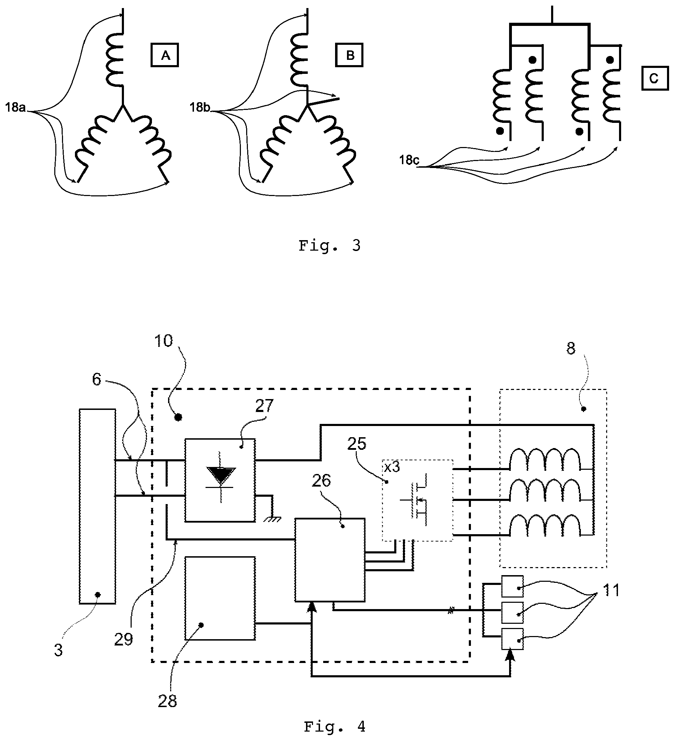

Un système de positionnement (figure 2), qu'il soit rotatif ou linéaire, est composé d'une unité de commande électronique déportée (1), dit ECU, et d'un actionneur (2) intégrant un circuit électronique rudimentaire (10) exploitant les signaux en provenance de sonde (11) renseignant sur la position du rotor d'un moteur DC sans balai (8) afin d'auto-commuter ce dernier. La présente invention s'applique à tout type de moteur DC sans balai polyphasé comme le montre quelques exemples de topologie triphasée (A et B) et diphasée (C) présentés en figure 3. Pour des simplifications de lecture, les descriptifs faits à la suite seront basés uniquement sur un sous ensemble de N compris entre 2 et 3 avec N étant le nombre de phase du moteur DC sans balai. La position de la sortie mécanique (12) de l'actionneur (2) est lue par l'ECU (1) grâce aux signaux de position (5) fournis par le capteur (7) accouplé à la sortie mécanique (12). L'ECU (1) alimenté par la batterie du véhicule (4), exécute un algorithme d'asservissement de position et génère les signaux de couple et de direction (6) à destination du moteur qui agira sur la sortie mécanique (12) de l'actionneur (2) par le biais d'un mécanisme de réduction de vitesse ou de transformation de mouvement (9). Le circuit électronique d'auto-commutation (10) est conçu de telle sorte que l'actionneur (2) qu'il soit motorisé par un moteur DC sans balai (figure 2) ou par un moteur DC avec balai (figure 1) offre une compatibilité tant dans les fonctions que dans les connexions (3).

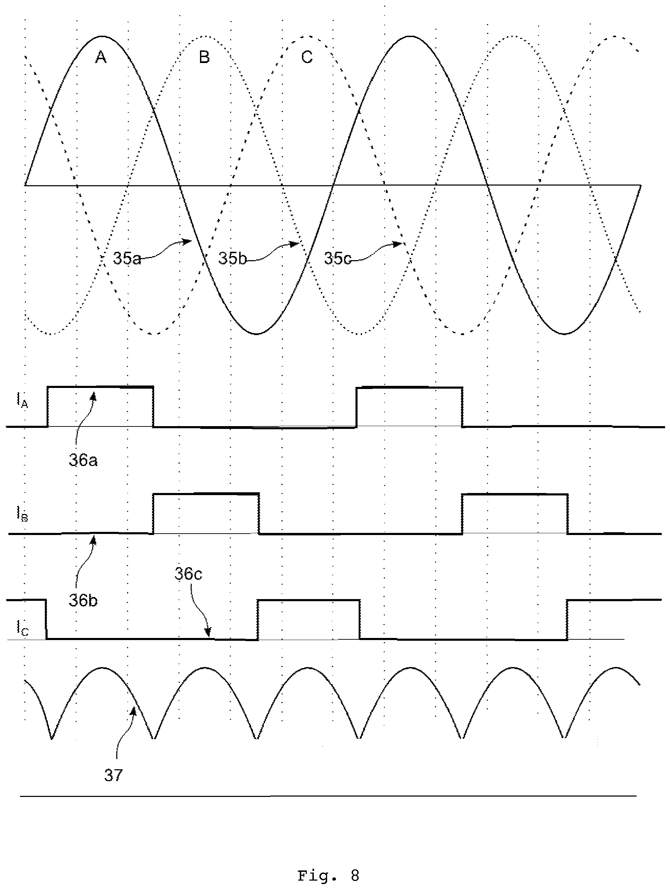

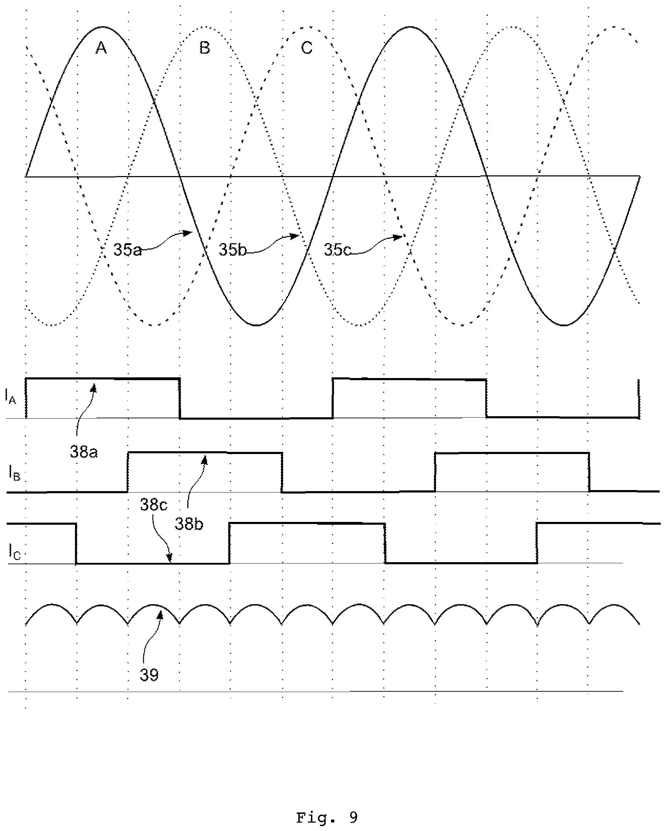

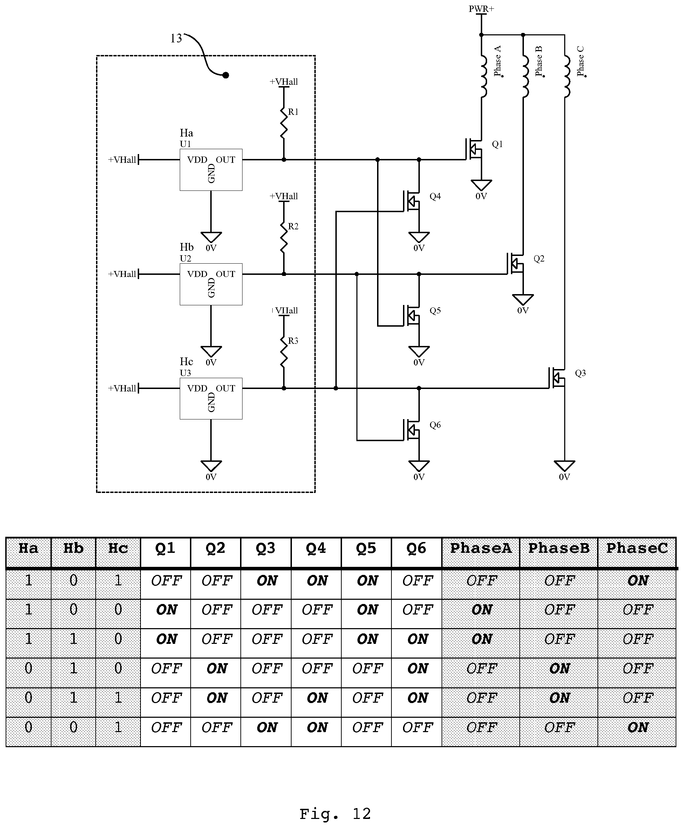

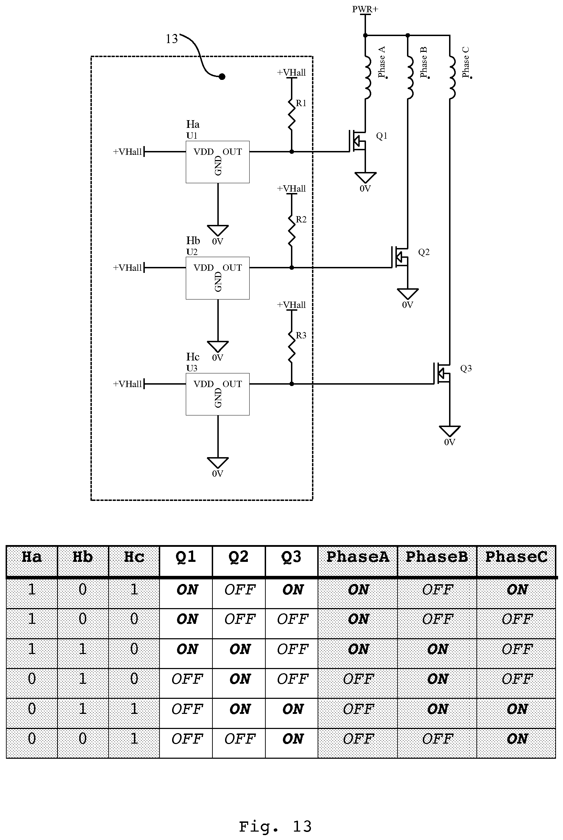

Dans un souci économique, le moteur DC sans balai (8) est commandé en mode unipolaire nécessitant seulement trois transistors. Ce qui simplifie également le circuit d'auto-commutation. Le système, destiné à réaliser un positionnement, travaillera de préférence en mode 180° (figure 9) offrant six pas moteur par période électrique comparé à trois pas dans le mode 120° (figure 8). Le nombre de pas par période électrique pour chacun de ces modes de fonctionnement peut être déduit de la forme du signal de couple (39 en figure 9 et 37 en figure 8). Le schéma électronique minimal permettant d'auto-commuter le moteur DC sans balai, est représenté en figure 12 et figure 13 pour les modes 120° et 180° respectivement.

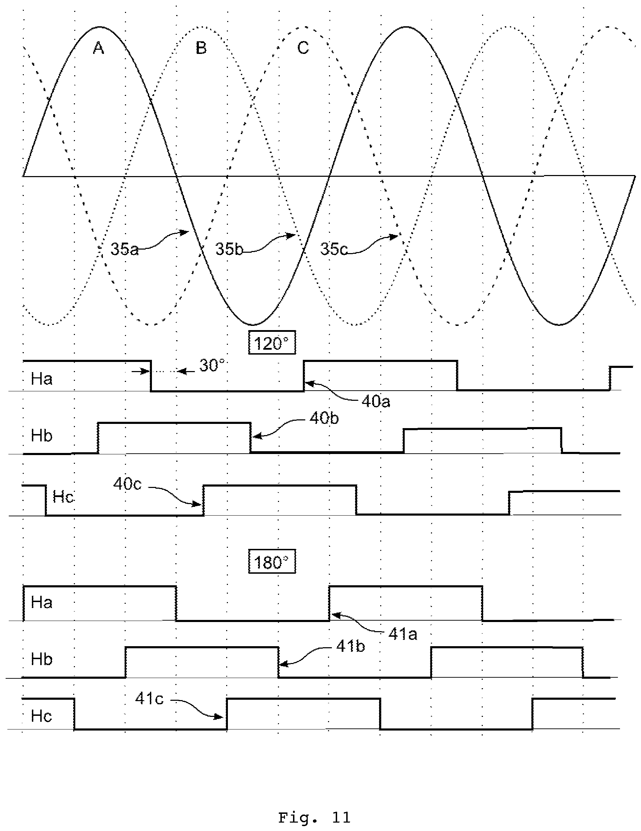

Pour chacun de ces modes la forme des courants circulant dans les phases du moteur, est représentée figure 8 et figure 9 pour les modes respectifs 120° et 180°. Le moment de commutation des sondes est différent suivant le mode de fonctionnement 120° ou 180°. Comme le montre la figure 11, le calage est avancé de 30° dans le cas du mode 120° afin de permettre, grâce à l'électronique simplifiée décrite en figure 11, d'obtenir un courant en phase avec la f.c.e.m. (force contre électromotrice) (35a, 35b, 35c) garant d'un couple moyen maximum.

La figure 8 décrit l'allure des courants (36a, 36b, 36c) pour chacune des phases du moteur (8) et leur phase respective par rapport à la f.c.e.m. (35a, 35b, 35c) des dites phase du moteur (8). Ce mode de pilotage est dit _{:} mode 120° unipolaire. La courbe (37) représente la forme du couple moteur.

La figure 9 décrit l'allure des courants (38a, 38b, 38c) pour chacune des phases du moteur (8) et leur phase respective par rapport à la f.c.e.m. (35a, 35b, 35c) des dites phase du moteur (8). Ce mode de pilotage est dit : mode 180° unipolaire. La courbe (39) représente la forme du couple moteur (8).

Un descriptif en figure 11 donne les indications permettant de sélectionner le meilleur calage des sondes (11) par rapport aux références que sont les signaux de f.c.e.m. (35a, 35b, 35c) générés par les phases du moteur (8).

Particulièrement, la figure 11 montre le phasage des signaux (40a, 40b, 40c) des sondes Ha, Hb, Hc par rapport à la f.c.e.m. (35a, 35b, 35c) des bobines respectives pour un mode d'auto-commutation à 120° ainsi que le phasage des signaux (41a, 41b, 41c) des sondes Ha, Hb, Hc par rapport à la f.c.e.m. (35a, 35b, 35c) des bobines respectives pour un mode d'auto-commutation à 180°.

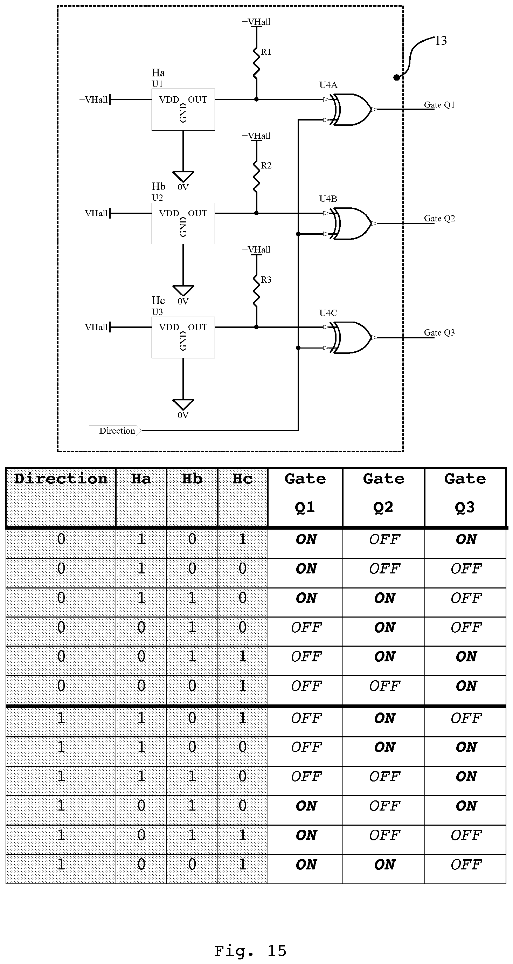

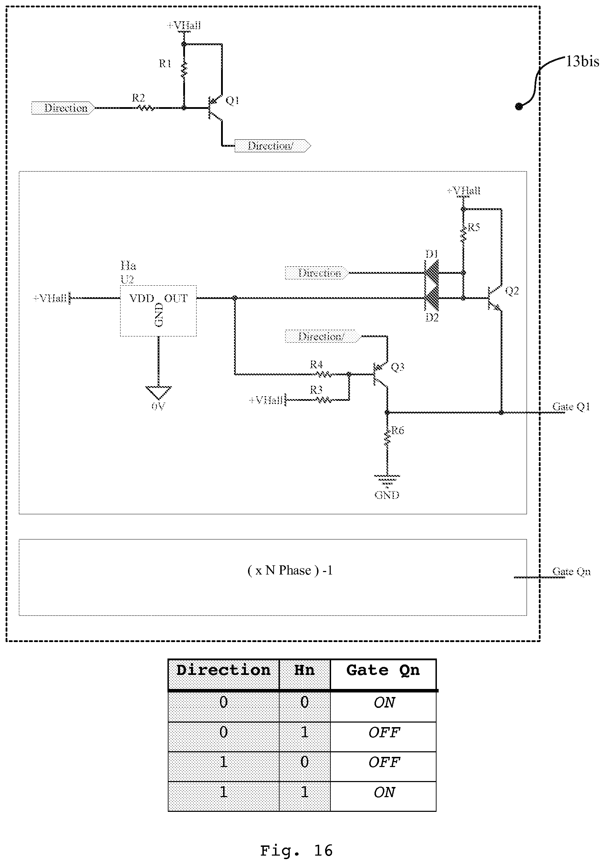

Il est connu des personnes du métier que le sens de rotation du moteur peut être inversé d'une part en croisant les connexions de chacune des bobines des phases du moteur, ou d'autre part en inversant le signal en sortie de chacune des sondes (11). Cette seconde possibilité est la solution retenue, mise en oeuvre par l'insertion d'une fonction 'OU EXCLUSIF' (U4a, U4b, U4c) à la sortie des sondes comme représentées en figure 15 pour former une commande bidirectionnelle (13). Un signal de direction commun à chacune des portes 'OU EXCLUSIF' (U4a, U4b, U4c) inversera ou non le signal provenant de la sonde (11) et de cette manière définira le sens de rotation du moteur (8). Cette option (13) est compatible avec un pilotage bidirectionnel en mode 120° ou 180°.
Un autre moyen de réalisation (13 bis) présenté en figure 16 permet de réaliser cette même fonction 'OU EXCLUSIF' mais uniquement avec des composants discrets (diodes, résistances et transistors) offrant ainsi plus facilement une très bonne compatibilité aux environnements haute température. La table de vérité correspond à GATE = NOT (DIRECTION ⊕HN). Ce procédé de réalisation pourra être préféré dans les applications nécessitant une compatibilité aux hautes températures > 125°C_{ambiant}.

L'étage de sortie d'une ECU (1) pilotant un actionneur, est typiquement un montage (figure 24) avec quatre transistors (15a, 15b, 15c, 15d) formant un pont de puissance « H » capable de délivré en sortie (6) un courant de signe positif ou négatif définissant le sens de rotation du moteur, et d'amplitude variable contrôlée par un découpage du signal (PWM) appliqué aux transistors (15a, 15b, 15c, 15d).

Le circuit électronique rudimentaire (10) n'acceptant pas une alimentation de polarité inverse, l'utilisation d'un pont redresseur à diodes (27) permet de séparer les signaux composés couple + direction (6) fournis par l'ECU (1) comme représenté en figure 4.

Le signal composé direction+couple (6) présent sur le connecteur (3) alimente le moteur (8) après redressement par un pont redresseur à diodes (27). Les N sondes (11) renseignent la logique de commutation (26) des N transistors de puissance (25) commutant les courants dans les N phases du moteur (8). Le signal (29) repris en amont du pont redresseur (27) indique le sens de rotation à la logique de commutation (26). Un régulateur de tension (28) fournit l'alimentation nécessaire aux sondes (11) et à la logique de commutation (26).

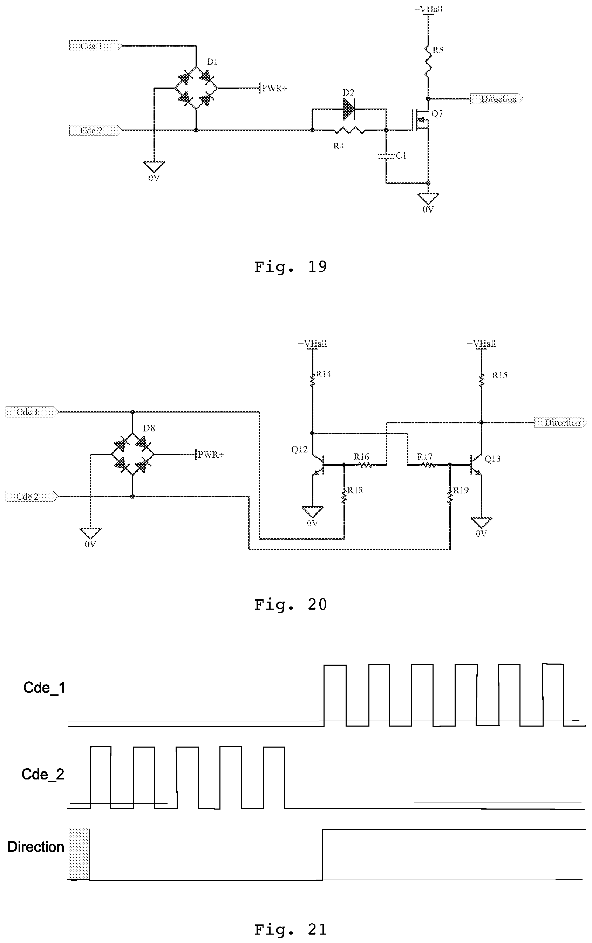

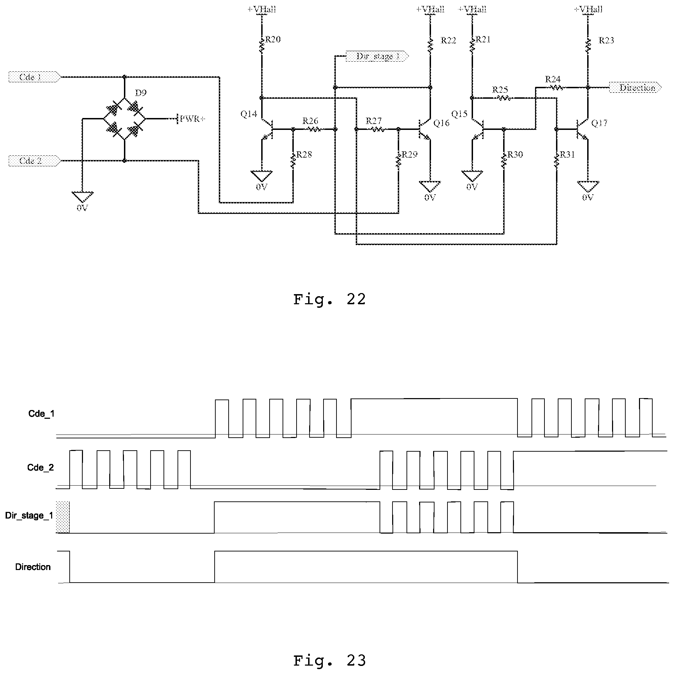

Le signal (29) sera repris en amont du pont redresseur (27) pour en extraire le signal de direction appliqué aux portes 'OU EXCLUSIF' (U4a, U4b, U4c). Ce signal de direction affecté par la commande PWM générée par l'ECU (1) et modulant le courant dans le moteur (8) pour en contrôler le couple, il est important de le mettre en forme grâce à un conditionneur donné en figure 19 représentant un exemple de circuit permettant d'extraire l'information de direction contenu dans le signal de commande couple + direction (6). La figure 20 présente le schéma électronique d'un moyen de réalisation différent et présentant l'avantage de s'adapter automatiquement à la fréquence du signal de commande PWM généré par l'ECU (1). Le signal de commande couple + direction (6) est appliqué aux entrées d'une bascule RS, composée des transistors Q12 et Q13, produisant le signal de direction comme représenté en figure 21. Un circuit électronique étendu mettant en oeuvre deux bascules RS cascadées comme présenté en figure 22 permet d'extraire un signal de direction du signal bifilaire (6) quelque soit le mode de pilotage : découpage sur les transistors 'LOW SIDE' ou découpage sur les transistors 'HIGH SIDE' (mode dépendant de l'algorithme de pilotage de l'ECU (1)). Les signaux produits par ces bascules sont représentés en figure 23.

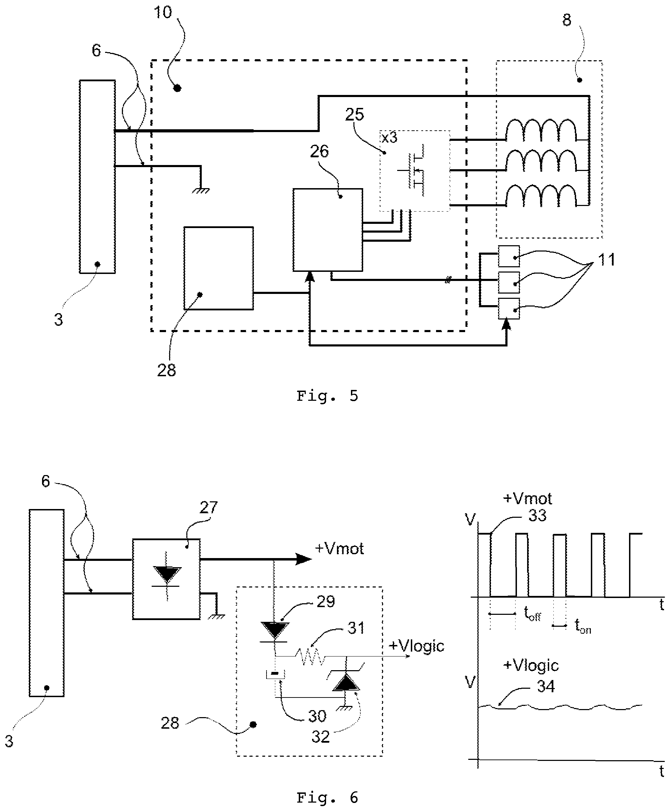

Pour des applications où la fonction de bidirectionnalité de l'actionneur (2) serait apporté par un élément extérieur, par exemple : un ressort de rappel sur la sortie de l'actionneur, il est envisageable de simplifier le schéma électronique et de se conformer à celui proposé en figure 5. Dans ce cas le signal (6) délivré par l'ECU (1) ne contient plus que l'information de couple. La polarité de ce signal étant fixe, le pont redresseur (27) n'est plus indispensable, ainsi que le circuit d'extraction du signal de direction (figure 19) et les fonctions 'OU EXCLUSIF' (U4a, U4b, U4c).

Hors alimentation du moteur (8), un mécanisme mécanique rappelle la sortie mécanique (12) de l'actionneur (2) en position de repos. Le signal de couple (6) présent sur le connecteur (3) alimente le moteur (8). Les N sondes (11) renseignent la logique de commutation (26) des N transistors de puissance (25) commutant les courants dans les N phases du moteur (8). Un régulateur de tension (28) fournit l'alimentation nécessaire aux sondes (11) et à la logique de commutation (26).

Afin de conserver la compatibilité avec les systèmes d'actionneur existants, la source d'alimentation (28) des sondes (11) et du circuit électronique rudimentaire (10) doit être extraite des signaux disponibles via le connecteur (3).

Une première proposition est de prendre la source au niveau du signal de couple fourni par l'ECU, comme le montre la figure 6. Le circuit régulateur (28) permet d'obtenir un signal continu (34) et d'amplitude adéquate à partir d'un signal haché (33). Ici le régulateur de tension (28) est alimenté par le signal de commande (6). Le circuit diode (29) / condensateur (30) permet de stocker l'énergie transmise par le signal PWM de commande (33) durant le temps Tₒₙ. Le circuit résistance (31) / diode zener (32) limite la tension à une valeur acceptable par les composants de l'électronique d'auto-commutation (26). L'ECU (1) doit néanmoins fournir un signal de couple minimum pour que le condensateur (30) puisse être rechargé durant la période Tₒₙ. La diode (29) empêche que le condensateur (30) se décharge dans les phases du moteur (8).

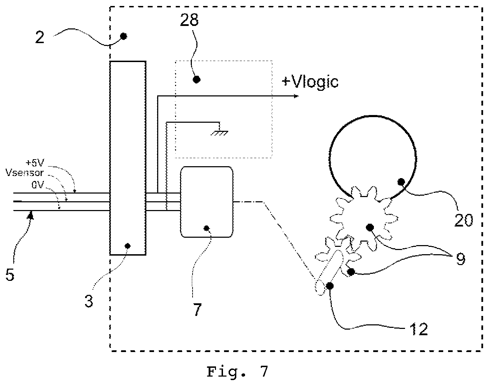

Une seconde proposition est, comme représentée en figure 7, d'alimenter les sondes (11) et le circuit électronique rudimentaire (10) avec une source d'alimentation commune au capteur de position (7). Le capteur de position (7) couplé à la sortie mécanique (12) de l'actionneur (2) est alimenté par des signaux externes (5) généralement, mais pas obligatoirement, une source de tension de 5V. Cette même source de tension est reprise par le régulateur (28) pour alimenter l'électronique d'auto-commutation (26).

Les composants mis en oeuvre dans cette solution restant très basique, il est possible de les choisir dans un catalogue proposant des températures de fonctionnement supérieures à 125°C. La proposition représentée en figure 7 sera préférée dans les situations nécessitant une température d'utilisation très supérieure à 125°C. En effet, le condensateur (C30), utilisé dans les modes de réalisation précédents, étant de type électrochimique au vue des valeurs requises, ce type de technologie reste à ce jour un point délicat voir bloquant pour les applications à hautes températures.

L'invention présentée précédemment sur la base d'un exemple de moteur triphasé peut tout aussi bien s'appliquer à un moteur polyphasé comportant de 1 à N bobines.

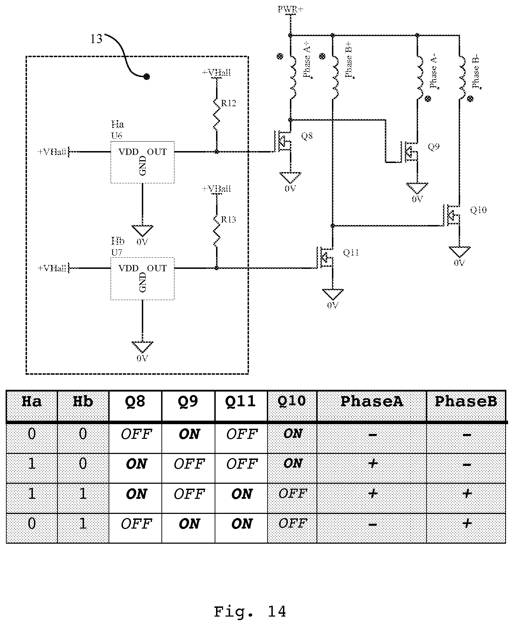

Un procédé de réalisation particulier est présenté figure 14, mettant en jeu un moteur DC sans balai diphasé à quatre demi-bobines (N = 2). Deux sondes (Ha et Hb) commandent directement l'état des N phases A et B à l'aide de quatre interrupteurs de puissance (Q8, Q9, Q10 et Q11). Le bloc de détection (13) peut également intégrer la fonction « OU EXCLUSIF » comme présentée figure 15 et figure 16 pour les applications nécessitant un pilotage bidirectionnel du moteur DC sans balais.

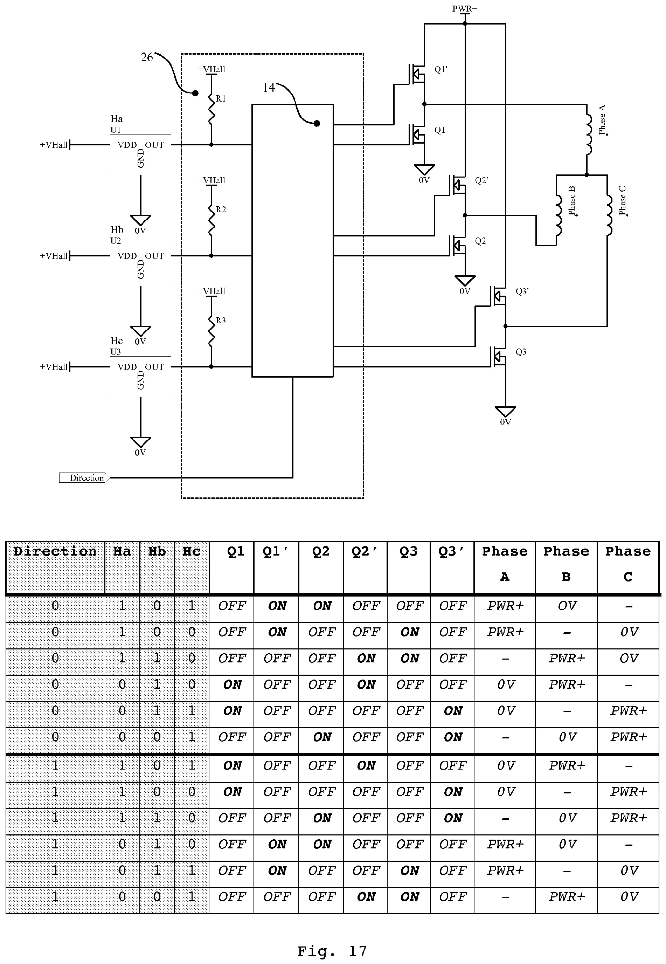

Il est connu des personnes du métier que les commutations d'un interrupteur de puissance en série avec une charge inductive telle la bobine d'une phase d'un moteur, génère une surtension suivant la formule : E = - Ld(i)/d(t). Dans les schémas classiques avec moteurs triphasés (ex : figure 12 et figure 13), la caractéristique V_{(BR)DSS} (Drain-to-Source Breakdown Voltage) du transistor MOSFET est fortement sollicité lors des phases de démagnétisation de la bobine. De par ce fait le transistor doit être dimensionné en conséquence.
Dans le procédé de réalisation particulier mettant en oeuvre un moteur DC sans balais « diphasé à point milieu » (figure 14), il est avantageux de favoriser un bobinage dit « deux fils en main » afin de bénéficier d'un très bon couplage entre les demi-bobines de chaque phase. Obtenant ainsi une grande mutuelle inductance Phase A+/Phase A- et Phase B+/Phase B-, le flux magnétique basculera de la bobine « Phase A+ » à la bobine « Phase A- » lors de l'ouverture de l'interrupteur de puissance Q8 (Q9 étant piloté de façon complémentaire). De ce couplage, la surtension aux bornes des interrupteurs de puissance sera limitée à deux fois la tension d'alimentation (PWR+). Ceci est également valable pour l'autre phase moteur : PhaseB+/PhaseB-, Q10, Q11. L'invention présentée précédemment sur la base d'une électronique d'auto-commutation (26) opérant un pilotage unipolaire (le courant ne circule que dans un seul sens du bobinage) du moteur DC sans balai (8), reste applicable à une réalisation particulière offrant un pilotage bipolaire (le courant circule dans les deux sens du bobinage). La figure 17 décrit le schéma de principe de cette réalisation particulière ; la logique de commande (14) des six transistors de puissance (Q1, Q1', Q2, Q2', Q3, Q3') répond à la table de vérité montrée sur cette même figure.

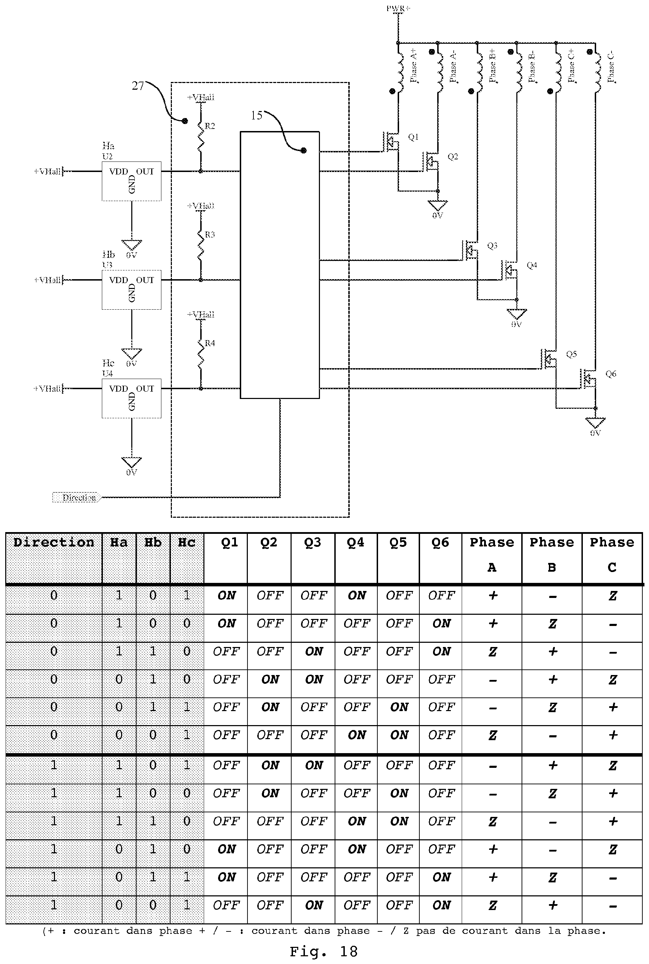

Ce procédé de réalisation sera réservé à des applications requérant un meilleur rendement et/ou un encombrement inférieur du moteur. En contre partie le circuit électronique rudimentaire (10) sera composé de six transistors de puissance (trois de plus), et sa logique de commande (14) associée sera plus complexe que les schémas de base figure 12 et figure 13. Un autre exemple de réalisation particulière offrant les mêmes avantages, avec un compromis sur l'optimisation du moteur, est présenté en figure 18 avec sa table de vérité. La différence réside dans l'utilisation de demi-bobines.

## Revendications

1. Ensemble mécatronique pour le positionnement d'un organe comprenant une unité de commande (1) et un actionneur (2), l'unité de commande (1) comprenant un algorithme d'asservissement et un pont de puissance, ledit algorithme pilotant ledit pont de puissance, le pont de puissance délivrant un signal électrique bifilaire (6) composé d'un signal de couple et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), **caractérisé en ce que** l'état des interrupteurs de puissance (25) est commandé directement par un signal issu des sondes (11) de détection.

2. Ensemble mécatronique pour le positionnement d'un organe selon la revendication 1 **caractérisé en ce que** le moteur (8) polyphasé à N phases est constitué de N bobines unipolaire ou bipolaire, ou N*2 demi-bobines unipolaires.

3. Ensemble mécatronique pour le positionnement d'un organe selon la revendication 1 ou 2 **caractérisé en ce que** le sens de rotation du moteur (8) est imposé par une logique combinatoire élémentaire bâtie à partir de la polarité du signal électrique bifilaire (6) et du signal des sondes (11) de détection.

4. Ensemble mécatronique pour le positionnement d'un organe selon l'une des revendications 1 à 3 **caractérisé en ce qu'**il comprend en outre un capteur d'asservissement (7) absolu de l'organe, alimenté par un deuxième signal électrique (5).

5. Ensemble mécatronique pour le positionnement d'un organe selon l'une des revendications 1 à 3 **caractérisé en ce qu'**il comprend en outre un capteur d'asservissement (7) absolu de l'organe alimenté par le signal électrique bifilaire (6).

6. Ensemble mécatronique pour le positionnement d'un organe selon l'une des revendications 1 à 5 **caractérisé en ce que** les sondes (11) de détection binaires de la position du rotor sont alimentées par le signal électrique bifilaire (6).

7. Ensemble mécatronique pour le positionnement d'un organe selon la revendication 4 **caractérisé en ce que** les sondes (11) de détection binaires de la position du rotor sont alimentées par le deuxième signal électrique (5)

8. Ensemble mécatronique pour le positionnement d'un organe selon la revendication 1 à 7 **caractérisé en ce que** le signal électrique bifilaire (6) est un signal continu dont l'amplitude et le signe sont contrôlés par l'algorithme d'asservissement à partir de l'information de position donné par le capteur d'asservissement (7).

9. Ensemble mécatronique pour le positionnement d'un organe selon l'une des revendications 1 à 7 **caractérisé en ce que** le signal bifilaire (6) est un signal haché dont le rapport cyclique est contrôlé par l'algorithme d'asservissement à partir de l'information de position donné par le capteur d'asservissement (7).

10. Ensemble mécatronique pour le positionnement d'un organe selon l'une des revendications précédentes **caractérisé en ce que** le signal bifilaire (6) est redressé par un pont de diodes (27) afin d'acheminer aux N phases du moteur un courant positif.

11. Ensemble mécatronique pour le positionnement d'un organe selon les revendications 3 et 9 **caractérisé en ce que** le sens de rotation du moteur (8) est déterminé par un signal de direction extrait du signal bifilaire (6) à l'aide d'une ou deux bascules le rendant indépendant de la fréquence et du rapport cyclique de hachage du dit signal bifilaire (6).

12. Ensemble mécatronique pour le positionnement d'un organe selon les revendications précédentes **caractérisé en ce que** le moteur (8) est constitué de demi-bobine à fort couplage magnétique limitant la dissipation dans les interrupteurs de puissance (25) durant les phases de démagnétisation de la dite bobine.

13. Vanne de contrôle de débit fluidique selon la revendication 1, **caractérisé en ce qu'**elle comporte un clapet entraîné par l'actionneur d'un ensemble mécatronique munie d'une unité de commande (1) comprenant un algorithme d'asservissement et un pont de puissance, ledit algorithme pilotant ledit pont de puissance, le pont de puissance délivrant un signal électrique bifilaire (6) composé d'un signal de couple et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), **caractérisé en ce que** l'état des interrupteurs de puissance (25) est commandé directement par un signal issu des sondes (11) de détection.

14. Circuit d'asservissement de l'actionneur d'un organe mobile monté sur un moteur thermique selon la revendication 1 **caractérisé en ce qu'**il comporte un calculateur exécutant un algorithme d'asservissement et un pont de puissance, ledit algorithme pilotant ledit pont de puissance, le pont de puissance délivrant un signal électrique bifilaire (6) composé d'un signal de couple et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), **caractérisé en ce que** l'état des interrupteurs de puissance (25) est commandé directement par un signal issu des sondes (11) de détection.

## Patentansprüche

1. Mechatronische Einheit zur Positionierung eines Elements, welche eine Steuereinheit (1) und ein Stellglied (2) umfasst, wobei die Steuereinheit (1) einen Regelungsalgorithmus und eine Leistungsbrücke umfasst, der Algorithmus besagte Leistungsbrücke regelt, die Leistungsbrücke ein elektrisches Signal (6) aussendet, das aus einem Drehmomentsignal und einem Richtungssignal besteht, und das Stellglied (2) einen bürstenlosen mehrphasigen Elektromotor (8) mit N Phasen, binären Sonden (11) zur Detektion der Stellung des Rotors des besagten Motors (8), Leistungsschalter (25) zur Versorgung der N Phasen des Motors (8) ausgehend von dem elektrischen Zweidrahtsignal (6) umfasst, **dadurch gekennzeichnet, dass** der Status der Leistungsschalter (25) direkt über ein Signal gesteuert wird, das von den Detektionssonden (11) ausgesendet wird.

2. Mechatronische Einheit zur Positionierung eines Elements nach Anspruch 1, **dadurch gekennzeichnet, dass** der mehrphasige Motor (8) mit N Phasen aus N ein- oder zweipoligen Wicklungen oder N+2 einpoligen Wicklungshälften besteht.

3. Mechatronische Einheit zur Positionierung eines Elements nach Anspruch 1 oder 2, **dadurch gekennzeichnet, dass** die Drehrichtung des Motors (8) durch eine kombinatorische elementare Logik vorgegeben ist, die auf der Polarität des elektrischen Zweidrahtsignals (6) und des Signals der Detektionssonden (11) beruht.

4. Mechatronische Einheit zur Positionierung eines Elements nach einem der Ansprüche 1 bis 3, **dadurch gekennzeichnet, dass** sie des Weiteren einen Absolutwertgeber der Regelung (7) des Elements umfasst und sie über ein zweites elektrisches Signal (5) gespeist wird.

5. Mechatronische Einheit zur Positionierung eines Elements nach einem der Ansprüche 1 bis 3, **dadurch gekennzeichnet, dass** sie des Weiteren einen Absolut-Feedback-Encoder (7) für die Regelung des Elements umfasst, der vom elektrischen Zweidrahtsignal (6) gespeist wird.

6. Mechatronische Einheit zur Positionierung eines Elements nach einem der Ansprüche 1 bis 5, **dadurch gekennzeichnet, dass** die binären Sonden (11) zur Detektion der Rotorstellung vom elektrischen Zweidrahtsignal (6) gespeist werden.

7. Mechatronische Einheit zur Positionieren eines Elements nach Anspruch 4, **dadurch gekennzeichnet, dass** die binären Sonden (11) zur Detektion der Rotorstellung vom zweiten elektrischen Signal (5) gespeist werden.

8. Mechatronische Einheit zur Positionierung eines Elements nach den Ansprüchen 1 bis 7, **dadurch gekennzeichnet, dass** das elektrische Zweidrahtsignal (6) ein kontinuierliches Signal ist, dessen Amplitude und Vorzeichen gesteuert werden über einen Regelungsalgorithmus ausgehend von der Information des Wertgebers der Regelung (7) zur Rotorstellung.

9. Mechatronische Einheit zur Positionierung eines Elements nach einem der Ansprüche 1 bis 7, **dadurch gekennzeichnet, dass** das Zweidrahtsignal (6) ein pulsgesteuertes Signal ist, dessen zyklisches Verhältnis über einen Regelungsalgorithmus ausgehend von der Information des Absolut-Feedback-Encoders der Regelung (7) in Bezug auf die Stellung des Rotors gesteuert wird.

10. Mechatronische Einheit zur Positionierung eines Elements nach einem der vorhergehenden Ansprüche, **dadurch gekennzeichnet, dass** das Zweidrahtsignal (6) über eine Diodenbrücke (27) gleichgerichtet wird, um zu den N Phasen des Motors einen positiven Strom zu leiten.

11. Mechatronische Einheit für die Positionierung eines Elements nach den Ansprüchen 3 und 9, **dadurch gekennzeichnet, dass** die Drehrichtung des Motors (8) bestimmt wird durch ein Richtungssignal, das aus dem Zweidrahtsignal (6) mit Hilfe eines oder zwei Flip-Flops extrahiert wird, die es von der Frequenz und dem zyklischen Pulsverhältnis besagten Zweidrahtsignals (6) unabhängig machen.

12. Mechatronische Einheit für die Positionierung eines Elements nach den vorhergehenden Ansprüchen, **dadurch gekennzeichnet, dass** der Motor aus einer halben Wicklung mit starker magnetischer Kopplung besteht, die die Verlustleistung in den Leistungsschaltern (25) während der Entmagnetisierungsphasen besagter Wicklung begrenzt.

13. Ventil zur Fluiddurchflussregulierung nach Anspruch 1, **dadurch gekennzeichnet, dass** es ein Klappenventil enthält, das von einem Stellglied einer mechatronischen Einheit mit Steuereinheit (1) gesteuert wird, wobei diese einen Regelungsalgorithmus und eine Leistungsbrücke enthält und besagter Algorithmus ein elektrisches Zweidraht-Gleichstromsignal (6) aussendet, bestehend aus einem Drehmomentsignal und einem Richtungssignal, und das Stellglied (2) einen bürstenlosen, mehrphasigen Elektromotor (8) mit N Phasen, Sonden (11) zur binären Detektion der Stellung des Rotors des Motors (8), und Leistungsschalter, die die N Phasen des Motors (8) ausgehend vom Zweidrahtsignal (6) speisen, umfasst, **dadurch gekennzeichnet, dass** der Status der Leistungsschalter (25) direkt über ein Signal gesteuert wird, das von den Detektionssonden (11) ausgesendet wird.

14. Regelkreis des Stellglieds eines beweglichen Elements, das auf einen Wärmemotor gemäß Anspruch 1 montiert wird, **dadurch gekennzeichnet, dass** es einen Rechner umfasst, der einen Regelungsalgorithmus und eine Leistungsbrücke ausführt, wobei der Algorithmus, der besagte Leistungsbrücke regelt, und die Leistungsbrücke ein elektrisches Zweitdraht-Gleichstromsignal (6) aussenden, das aus einem Drehmomentsignal und einem Richtungssignal besteht, wobei das Stellglied (2) einen mehrphasigen bürstenlosen Elektromotor (8) mit N Phasen, Sonden (11) für die binäre Detektion der Rotorposition besagten Motors (8), und Leistungschalter (25), die in der Lage sind, die N Phasen de Motors (8) ausgehend von einem elektrischen Zweidrahtsignal (6) zu versorgen, umfasst, **dadurch gekennzeichnet, dass** der Status der Leistungsschalter (25) direkt über ein Signal gesteuert wird, das von den Detektionssonden (11) ausgesendet wird.

## Claims

1. A mechatronic assembly for positioning a member comprising a control unit (1) and an actuator (2), with the control unit (1) comprising a servo-control algorithm and a power bridge, with said algorithm controlling said power bridge, with the power bridge outputting a direct current two-wire electric signal (6) consisting of a torque signal and a direction signal, with the actuator (2) comprising a polyphase brushless electric motor (8) having N phases, binary probes (11) for detecting the position of the rotor of said motor (8), power switches (25) suitable for supplying the N phases of the motor (8) from the two-wire electric signal (6), **characterized in that** the state of the power switches (25) is directly controlled by a signal emitted by the detection probes (11).

2. A mechatronic assembly for positioning a member according to claim 1, **characterized in that** the N-phase polyphase motor (8) consists of N unipolar or bipolar coils, or N*2 unipolar half-coils.

3. A mechatronic assembly for positioning a member according to claim 1 or 2, **characterized in that** the direction of rotation of the motor (8) is imparted by an elementary combinatorial logic built from the polarity of the two-wire electric signal (6) and of the signal emitted by the detection probes (11).

4. A mechatronic assembly for positioning a member according to one of claims 1 to 3, **characterized in that** it further comprises a sensor (7) for the absolute servo-control of the member supplied with a second electric signal (5).

5. A mechatronic assembly for positioning a member according to one of claims 1 to 3, **characterized in that** it further comprises a sensor (7) for the absolute servo-control of the member supplied with the two-wire electric signal (6).

6. A mechatronic assembly for positioning a member according to one of claims 1 to 5, **characterized in that** the rotor position binary detection probes (11) are supplied with the two-wire electric signal (6).

7. A mechatronic assembly for positioning a member according to claim 4, **characterized in that** the rotor position binary detection probes (11) are supplied with the second electric signal (5).

8. A mechatronic assembly for positioning a member according to claim 1 to 7, **characterized in that** the two-wire electric signal (6) is a DC signal, the magnitude and sign of which are controlled by the servo-control algorithm from the position information given by the servo-control sensor (7).

9. A mechatronic assembly for positioning a member according to one of claims 1 to 7, **characterized in that** the two-wire signal (6) is a hashed signal, the duty factor of which is controlled by the servo-control algorithm from the position information given by the servo-control sensor (7).

10. A mechatronic assembly for positioning a member according to one of the preceding claims, **characterized in that** the two-wire signal (6) is rectified by a diode bridge (27) in order to route a positive current to the N phases of the motor.

11. A mechatronic assembly for positioning a member according to claims 3 and 9, **characterized in that** the direction of rotation of the motor (8) is determined by a direction signal extracted from the two-wire signal (6) using one or two flip-flops making it independent of the frequency and the hashing duty factor of said two-wire signal (6).

12. A mechatronic assembly for positioning a member according to the preceding claims, **characterized in that** the motor (8) is made of half-coils with a strong magnetic coupling limiting the dissipation in the power switches (25) during the degaussing phases of said coil.

13. A fluid flow control valve according to claim 1, **characterized in that** it comprises a flap-valve driven by the actuator of a mechatronic assembly provided with a control unit (1) comprising a servo-control algorithm and a power bridge, with said algorithm controlling said power bridge, with the power bridge outputting a two-wire electric signal (6) consisting of a torque signal and a direction signal, with the actuator (2) comprising a polyphase brushless electric motor (8) having N phases, binary probes (11) for detecting the position of the rotor of said motor (8), power switches (25) suitable for supplying the N phases of the motor (8) from the two-wire electric signal (6), **characterized in that** the state of the power switches (25) is directly controlled by a signal emitted by the detection probes (11).

14. A circuit for servo-controlling the actuator of a moving member mounted on a heat engine according to claim 1, **characterized in that** it comprises a computer executing a servo-control algorithm and a power bridge, with said algorithm controlling said power bridge, with the power bridge outputting a direct current two-wire electric signal (6) consisting of a torque signal and a direction signal, with the actuator (2) comprising a polyphase brushless electric motor (8) having N phases, binary probes (11) for detecting the position of the rotor of said motor (8), power switches (25) suitable for supplying the N phases of the motor (8) from the two-wire electric signal (6), **characterized in that** the state of the power switches (25) is directly controlled by a signal emitted by the detection probes (11).
